# EUROPEAN PATENT SPECIFICATION

(11) **EP 0 663 510 B1**
(45) Date of publication and mention of the grant of the patent: **17.11.2004**
(21) Application number: 95200809.2
(22) Date of filing: 03.04.1990
(51) Int. Cl.: E21B 37/06, C02F 5/12

(54) **Sulfate scale dissolution**
Auflösung von Sulfatniederschlägen
Dissolution de la calamine de sulfate

(30) Priority: 03.04.1989 US 332147; 22.06.1989 US 369897; 03.11.1989 US 431114; 26.02.1990 US 484970; 09.03.1990 US 490886; 14.03.1990 US 493180
(43) Date of publication of application: 19.07.1995
(62) Divisional of application: 90906465.1
(73) Proprietor: EXXONMOBIL OIL CORPORATION, Fairfax, VA 22037 (US)
(72) Inventor: Morris, Richard L., Duncanville, Texas 75116 (US); Paul, James Mark, DeSoto, Texas 75115 (US)
(74) Representative: Jones, Helen Marjorie Meredith

(56) References cited:
- GB-A- 2 024 822
- US-A- 3 308 065
- US-A- 3 625 761
- US-A- 3 684 720
- US-A- 4 708 805

## Description

This invention relates to sulphate scale dissolution. More particularly the invention relates to compositions and methods for dissolving an alkaline earth metal sulphate scale, especially strontium and barium sulphate scale. The invention is particularly useful for the removal of such scale from oilfield equipment including downhole pipe, tubing and casing as well as subterranean formations. It is also applicable to the removal of these scale deposits from other equipment such as boilers and heat exchangers.

Reference is hereby made to our copending patent application of even date entitled "Method of Decontaminating Earth and/or Natural Gas Processing Equipment". Many waters contain alkaline earth metal cations, such as barium, strontium, calcium and magnesium, and anions, such as sulphate, bicarbonate, carbonate, phosphate, and fluoride. When combinations of these anions and cations are present in concentrations which exceed the solubility product of the various species which may be formed, precipitates form until the respective solubility products are no longer exceeded. For example, when the concentrations of the barium and sulphate ions exceed the solubility product of barium sulphate, a solid phase of barium sulphate will form as a precipitate. Solubility products are exceeded for various reasons, such as evaporation of the water phase, change in pH, pressure or temperature and the introduction of additional ions which can form insoluble compounds with the ions already present in the solution.

As these reaction products precipitate on the surfaces of the water-carrying or water-containing system, they form adherent deposits or scale. Scale may prevent effective heat transfer, interfere with fluid flow, facilitate corrosive processes, or harbour bacteria. Scale is an expensive problem in many industrial water systems, in production systems for oil and gas, in pulp and paper mill systems, and in other systems, causing delays and shutdowns for cleaning and removal.

Barium and strontium sulphate scale deposits present a unique and particularly intractable problem. Under most conditions, these sulphates are considerably less soluble in all solvents than any of the other commonly encountered scale-forming compounds, as shown by the comparative solubilities given in Table 1 below.

**Table 1**

| Comparative Solubilities, 25°C in Water | |
|---|---|
| Scale | Solubility, mg./l |
| Gypsum | 2080.0 |
| Strontium sulphate | 140.0 |
| Calcium Carbonate | 14.0 |
| Barium sulphate | 2.3 |

It is generally acknowledged that barium sulphate scale is extremely difficult to remove chemically, especially within reasonably short periods of time: the solvents which have been found to work generally take a long time to reach an equilibrium concentration of dissolved barium sulphate, which itself is usually of a relatively low order. Consequently, barium sulphate must be removed mechanically or the equipment, e.g. pipes, etc., containing the deposit must be discarded.

The incidence of barium sulphate scale is worldwide, and it occurs principally in systems handling subsurface waters. Because of this, the barium sulphate scale problem is of particular concern to the petroleum industry as water is generally produced with petroleum and as time goes on, more petroleum is produced by the waterflooding method of secondary recovery, implying even greater volumes of produced water. The scale may occur in many different places, including production tubing, well bore perforations, the area near the well bore, gathering lines, meters, valves and in other production equipment. Barium sulphate scale may also form within subterranean formations such as in disposal wells. Scales and deposits can be formed to such an extent that the permeability of the formation is impaired resulting in lower flow rates, higher pump pressure, and ultimately abandonment of the well.

Barium sulphate scale is particularly troublesome when sulphate-rich seawater is used as an injection fluid in oil wells whose formation water is rich in barium ions. This particular aspect of the barium scale problem is severe in some U.S. oil fields as well as some older North Sea oil fields. Scaling of this nature is also expected to occur during advanced production stages in other North Sea fields particularly after seawater breakthrough has taken place.

Another problem associated with the formation of barium and strontium sulphate scales is that radium, another member of the alkaline earth group of metals tends to be deposited at the same time so that the equipment becomes radioactive, and may eventually have to become unusable for safety reasons alone. At present, a considerable amount of oilfield tubular goods are in this condition and cannot be readily restored to usable condition because of the difficulty of removing the radioactive scale.

Various proposals have been made in the past for removing barium sulphate scale chemically. Most of these processes have utilised chelating or complexing agents, principally the polyaminopolycarboxylic acids such as ethylenediaminetetraacetic acid(EDTA) or diethylenetriaminepentaacetic acid(DTPA).

US-A-2877848 discloses the use of EDTA in combination with various surfactants for this purpose. US-A-3660287 discloses the use of EDTA and DTPA in the presence of carbonate ion at relatively neutral pH (6.5-9.5) and US-A-4,708,805 discloses a process for the removal of barium sulphate scale by sequestration using an aqueous solution of citric acid, a polycarboxylic acid such as carbazic acid, and an alkylene-polyaminopolycarboxylic acid such as EDTA or DTPA. The preferred aqueous sequestering solutions have a pH in the range of about 9.5 to about 14, provided by a base such as potassium hydroxide or potassium carbonate.

Another approach which has recently been made is to use a polyether in combination with the aminopolycarboxylic acid. US-A-4,190,462 discloses that barium sulphate scale can be removed from remote locations extending into a subterranean earth formation by contacting the scale with an aqueous solution consisting essentially of water, a monovalent cation salt of a monocyclic macrocyclic polyether containing at least two nitrogen-linked carboxymethyl groups and enough monovalent basic compound to provide a solution pH of about 8. Similar disclosures are to be found in US-A-4215000 and US-A-4288333. These polyether materials have, however, the disadvantage of being costly which is a severe drawback for oilfield use where cost is a major factor.

Although many of these known compositions will remove scale, the rate of dissolution is slow and the amount of scale dissolved is small.

We have now found a way of removing barium sulfate scale using various novel combinations of scale-removing agents. These combinations are capable of removing scale at markedly higher speeds than prior scale-removing compositions and are also capable of removing relatively more scale for a given quantity of solvent. They are, however, relatively cheap and are therefore well suited to use in oilfield operations.

In accordance with one aspect of this invention, there is provided a composition for dissolving alkaline earth sulfate scale comprising an aqueous alkaline solution having a pH of from 11 to 13, from 0.3M to 0.6M of a chelating agent comprising a polyaminopolycarboxylic acid or a salt of such an acid, and from 0.3M to substantially 0.6M of a catalyst comprising at least an anion selected from amino-, mercapto- and hydroxy-acetic acid to improve the scale removing characteristics of the composition.

This invention also provides a method of dissolving an alkaline earth metal sulfate scale which method comprises contacting the scale with a composition of the invention for a time and at temperature sufficient to dissolve it.

In the composition of the invention the constituents are preferably selected such that 80% to 90% of a solution level of barium, strontium or calcium sulfate is dissolved from powdered scale in about 10 minutes at a temperature of about 100°C.

The invention can also be applied to the reduction of the radioactivity of oilfield tubular goods contaminated with radium-containing scale of deposited alkaline earth metal sulphates. This method involves contacting the scale or the aqueous solution with one of the aqueous compositions described above for a time sufficient to remove the scale from the tubular goods.

Substantially improved scale dissolution rates are obtained when the aqueous solution containing the composition is at a temperature of 25°C to about 100°C, but higher temperatures are obtainable downhole because at greater formation depths higher existing pressures will raise the boiling point of the aqueous solution, and consequently greater scale removal rates may be attained.

In accordance with the present invention, alkaline earth metal sulphate scales, especially barium sulphate scale, are removed by the use of a combination of chemical scale-removing agents. The method is particularly useful for the removal of such scale from oilfield equipment used to bring oil and/or water from subterranean formations to the surface. The method may, however, also be used to remove scale from the formations themselves, especially in the regions surrounding production and injection wells, as mentioned above. The method may also be used to remove scale from above-ground equipment both in the oilfield and elsewhere, for example, from boilers and heat exchangers and other equipment exposed to scale-forming conditions.

The scale itself is usually in the form of an adherent deposit of the scale-forming mineral on metal surfaces which have been exposed to the water containing the scale-forming components. These components comprise alkaline earth metals including calcium, strontium and barium, together with variable amounts of radium, depending upon the origin of the waters. As noted above, barium sulphate scale is particularly difficult to remove by existing chemical methods in view of its very low solubility.

The present scale removal is effected with an aqueous solvent which comprises a polyaminopolycarboxylic acid such as EDTA or DTPA as a chelant or chelating agent which is intended to form a stable complex with the cation of the alkaline earth scale-forming material. Of these chelants, DTPA is the preferred species since it forms the most soluble complexes at greatest reaction rate. EDTA may be used but is somewhat less favourable and, as noted below, may be less responsive to the addition of the catalyst or synergist. The chelant may be added to the solvent in the acid form or, alternatively, as a salt of the acid, preferably the potassium salt. In any event the alkaline conditions used in the scale removal process will convert the free acid to the salt.

Chelant concentration from about 0.3M up to about 0.6M will normally give good results; there is generally no advantage to using higher concentrations because the efficiency of the chelant utilisation will be lower at excess chelant concentrations. This economic penalty is particularly notable in oilfield operations where large volumes of solvent may be used, especially in formation scale removal treatment.

The acid catalyst is substituted with electronegative groups selected from hydroxyl, amino and mercapto. The substituted acids have good solubility in oilfield waters, are readily available and are relatively inexpensive.

The acids have been found to enhance the rate of barium sulphate scale dissolution using polyaminopolycarboxylic chelants, especially DTPA, to a significant and useful degree, so that dissolution of oilfield scales is usefully accelerated by the use of these compositions.

It has been found that the action of the catalyst may be selective for the chelant.

The use of DTPA is favoured not only because it generally shows an improved propensity in itself to remove the alkaline earth metal sulphate scales but also because it exhibits better response to a number of these catalysts.

The carboxylate catalyst may be added as the free acid or the salt, preferably the potassium salt. If the free acid is used, the addition of the potassium base to provide the requisite solution pH will convert the acid to the salt form under the conditions of use.

The concentration of the catalyst in the aqueous solvent will be of a similar order to that of the chelant: thus, catalyst concentrations from about 0.3M up to about 0.6M will give good results in terms of a perceptible increase in the efficiency of scale removal. There is generally no advantage to using higher concentrations because the efficiency of the process will be lower at excess catalyst concentrations. Again, this economic penalty is particularly notable in oilfield operations.

The scale removal is effected under alkaline conditions at pH values of from 11 to 13, preferably about 12.

The preferred solvents comprise ethylenediaminetetraacetic acid (EDTA) or diethylenetriaminepentaacetic acid (DTPA), or salts of these acids, as a chelant. In addition, the catalyst is added to the aqueous solution preferably about up to 0.5M. The pH of the solvent is then adjusted by the addition of a base, to the desired value, preferably to about pH 12. The base may be a hydroxide of lithium, sodium, potassium or cesium, but potassium is preferred. We have found that it is important to avoid the use of sodium cations when operating at high pH values, above pH 8, and instead, to use potassium or, alternatively, cesium as the cation of the scale-removing agent. Potassium is preferred for economy as well as availability. Thus, the normal course of making up the solvent will be to dissolve the chelant and the acid catalyst (or its potassium salt) in the water to the desired concentration, after which a potassium base, usually potassium hydroxide is added to bring the pH to the desired value of about 12. This aqueous composition can be used to remove scale from the equipment, or alternatively, pumped into the subterranean formation when it is the formation which is to be subjected to descaling.

The mode of operation of the catalyst is not presently understood. While not desiring to be bound to a particular theory concerning the actual mechanism of its activity in converting or dissolving the scale, it is believed that adsorption of the catalyst on the barium sulphate surface may modify the surface crystal structure in such a way that the barium in the modified crystal is easily removed by the chelating agent.

The aqueous solution containing the composition can be directed down a wellbore to remove barium sulphate scale which has fouled the tubular equipment e.g. piping, casing etc., and passage ways. Prior to being directed into the wellbore, the composition may be heated to a temperature between about 25°C to about 100°C, although the temperatures prevailing downhole may make pre-heating unnecessary. Once within the tubular goods and the passageways requiring treatment, the composition is allowed to remain there for about ten minutes to about 7 hours. After remaining in contact with the equipment for the desired time, the composition containing the dissolved scale is produced to the surface and may be disposed of as required, possibly by re-injection into the subsurface formation. This procedure can be repeated as often as required to remove scale from the equipment.

In one procedure for circulating the solvent through the tubular goods in the well the solvent is pumped down through the production tube and returned to the surface through the annular space between the production tubes and the casing (or vice versa). Also, the cleaning solution may be pumped down through the production tubing and into the formation, thereby cleaning the well, including the well casing, and the formation pore space by dissolving barium sulphate present as it flows over and along the surfaces that need cleaning. The spent composition containing the dissolved, complexed barium together with any other alkaline earth metal cations which may have been present in the scale, especially radium, can be subsequently returned to the surface, for example, by displacement or entrainment with the fluids that are produced through the well after the cleaning operation. In an alternative manner, the cleaning solution may be applied batchwise fashion, for example, by flowing the solution into the well and optionally into the pore spaces of the adjacent earth formation and there keeping the solution in contact in non-flowing condition with the surfaces that are covered with barium sulphate scale, for a period of time sufficient to dissolve the scale.

The present scale removal technique is very effective for lowering residual radioactivity of pipe contaminated with radium-containing barium sulphate scale. As noted above, radium is frequently precipitated with barium in scale with the result that scaled pipe is often radioactive to the point that it cannot safely be used. Using the present scale removal compositions, activity can be reduced to an acceptable level in comparatively short times without further treatment. Some residual activity arises from lead and other radio-isotopes which are not dissolved in the solvent: these isotopes are decay products of radium and have originally been incorporated in the scale with the barium and the radium sulphates. Although they are not removed chemically by the present scale removal technique, the dissolution of the barium scale together with the other alkaline earth metal sulphates enables these other components of the scale to be removed by simple abrasion, for example, by scrubbing with or without a detergent/water scrub solution. In this way, the residual activity level may be reduced to a very low value, below the appropriate regulatory standards. Thus, by using the present chemical scale removal technique in combination with a simple mechanical removal of loose, non-adherent material, previously radioactive pipe may quickly and readily be restored to useful, safe condition.

Reference is now made to the accompanying drawings in which:
Figure 1 is a reference graph which shows the effect of chelant concentration on the rate of barium sulphate dissolution;
Figure 2 is a reference graph which shows effect of temperature on the rate of barium sulphate dissolution;
Figure 3 is a reference graph which shows the respective rates of dissolution of various sulphate species on a chelant-containing solvent;
Figure 4 is a reference graph which shows the respective rates of dissolution of various barium sulphate species in a chelant-containing solvent;
Figure 5 is a reference graph which shows the low residual rates of radioactivity which may be achieved for contaminated oilfield pipe by use of the present scale removal process.
Figure 6 is a graph which shows the rate of dissolution of barium sulphate in solutions of DTPA containing the substituted acetic acids as catalysts according to the invention.

The compositions and methods according to the invention are particularly useful for more efficiently removing barium or strontium sulphate scale from wells, wellstream processing equipment, pipelines and tubular goods used to produce oil from a subterranean formation.

In order to demonstrate the barium sulphate scale-dissolving capacities of the composition, several aqueous solutions have been tested in laboratory tests the results which are described in the discussions which follow. The experiments described below were, except as noted below, carried out in a cylindrical glass vessel having a height of 10 cm and an internal diameter of 7.5 cm. Barium sulphate, or where applicable, other solid scale components were added to the test solution and agitated with the selected solvents and the rates of dissolution and final dissolved concentrations determined. The results are reported graphically in the figures.

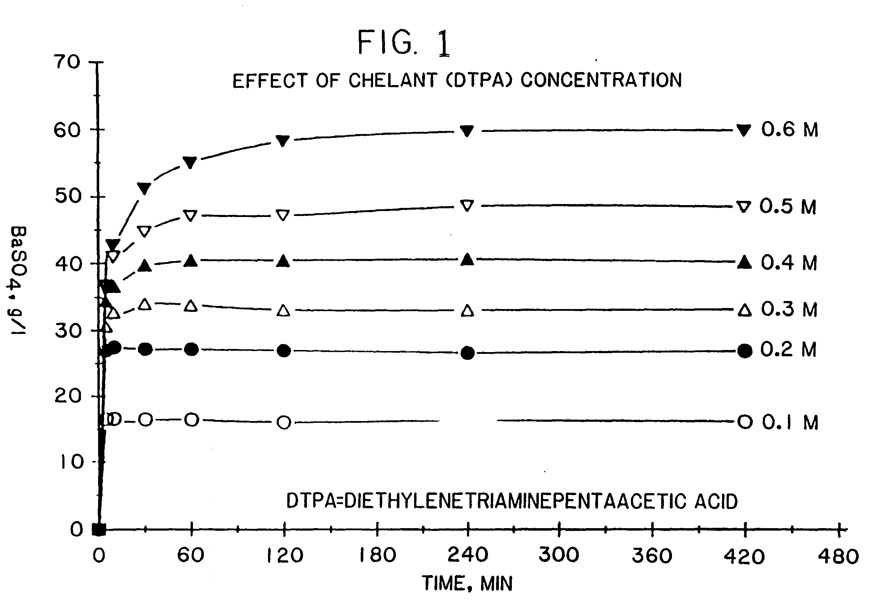

Barium sulphate or other scales dissolved in the solvent are influenced by the concentration of chelant used. The effect of varying the DTPA concentration (100°C) is depicted in Figure 1 at chelant concentrations from 0.1M to 0.6M. Increased DTPA concentration causes an increase in the rate of barium sulphate dissolution and the amount of barium sulphate held in the solvent. It should be noted in particular that the final equilibrium concentration of barium sulphate is 60 g/l which is far in excess of the solubility in water alone.

As mentioned above, the rate of barium sulphate scale dissolution varies with the solvent composition utilised. In order to determine candidates for use as a solvent, free energy calculations for the conversion of barium sulphate to barium carbonate were utilised. This is a well known conversion using concentrated sodium carbonate solution and solid alkaline earth metal sulphates. Free energy of conversion of barium sulphate to barium carbonate is calculated as essentially zero, meaning that the conversion is energetically favourable. However, the conversion is expected to reach equilibrium with less than full conversion of barium sulphate to barium carbonate. This is the actual reaction situation with only about 75-80 percent of the barium sulphate being converted. Further calculations were made using common anions, both organic and inorganic. Experimentally, it was determined that the catalysts alone (without EDTA OR DTPA) have no scale dissolution properties of their own.

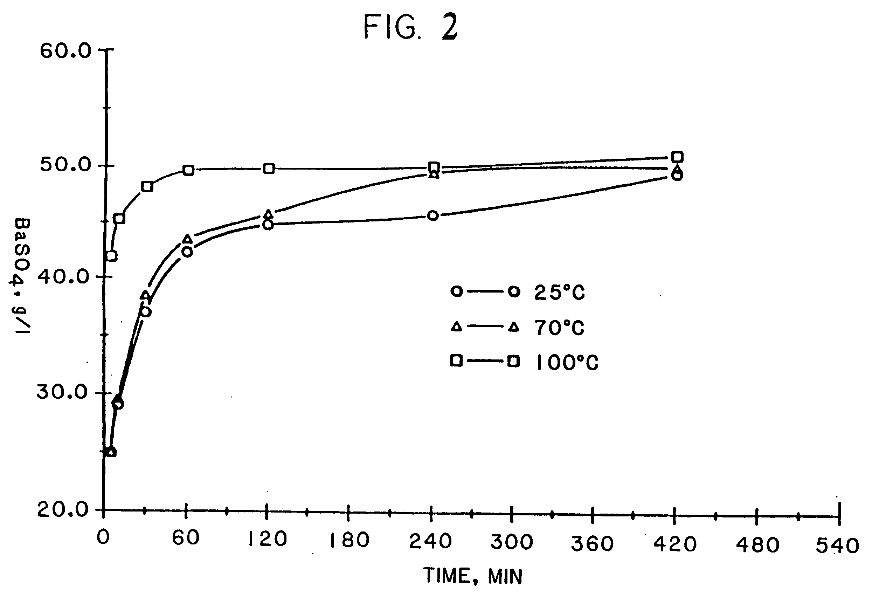

Figure 2 shows that the rate of dissolution of the barium sulphate scale is related to temperature, with faster rates of dissolution being attained at the higher temperature (0°C).

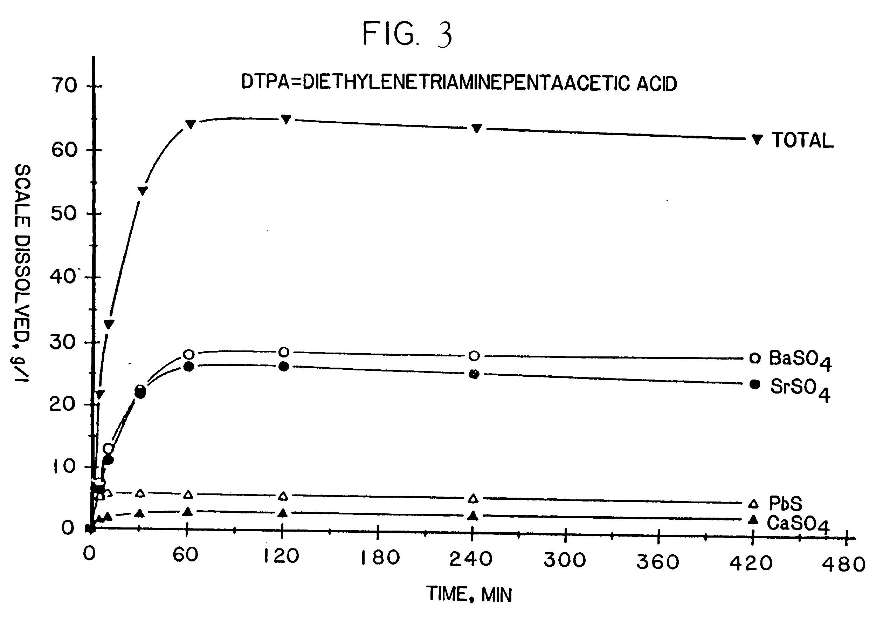

Figure 3 shows the results of a batch test carried with scale material removed from field tubing similar to that used in a continuous flow loop test in which the test solution was circulated. The samples of scale material were added to the solvent (0.5M DTPA, 0.5M oxalate pH-12, 0°C) in a concentration equivalent to 60 g./l. of scale. The concentrations of the different species dissolved in the solvent at different times were determined. The results of the batch tests are shown in Figure 3 and indicate that in addition to the dissolution of the barium, the strontium sulphate also reaches equilibrium concentration in a very short time. The results from the flow loop tests are similar but with much lower final concentrations.

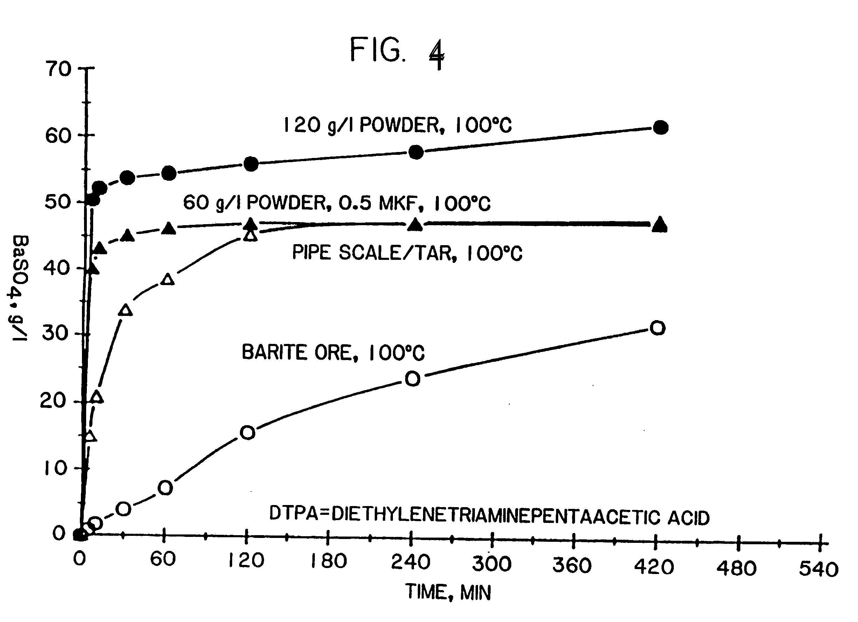

Figure 4 shows that the scale removal process is effective both with barium sulphate in the powder form and also with actual pipe scale/tar mixtures and with barite ore (BaSO₄).

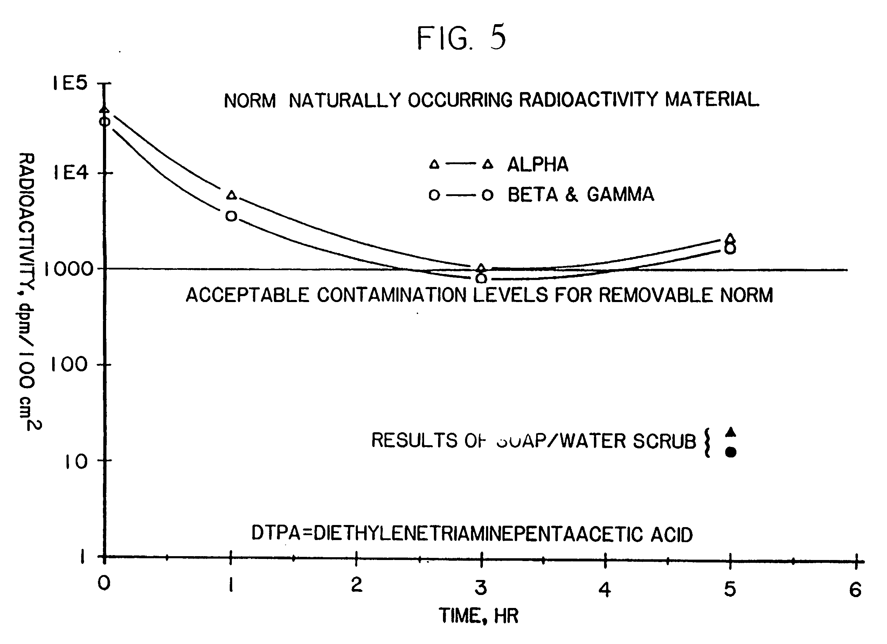

Figure 5 shows that the present scale removal technique is very effective for lowering residual radioactivity of pipe contaminated with radium-containing barium sulphate scale. As noted above, radium is frequently precipitated with barium in scale with the result that scaled pipe is often radioactive to the point that it cannot safely be used. A continuous flow loop test was used to remove the scale from pipe the radioactivity was determined at successive times during the test. As shown in the Figure, the activity was reduced to an acceptable level after three hours without further treatment. It appears, however, that some residual activity arises from lead and other radio-isotopes which are not dissolved in the solvent (see Fig. 5); these isotopes are decay products of radium and have originally been incorporated in the scale with the barium and the radium sulphates. Although they are not removed chemically by the present scale removal technique, the dissolution of the barium scale together with the other alkaline earth metal sulphates enabled these other components of the scale to be removed by simple abrasion.

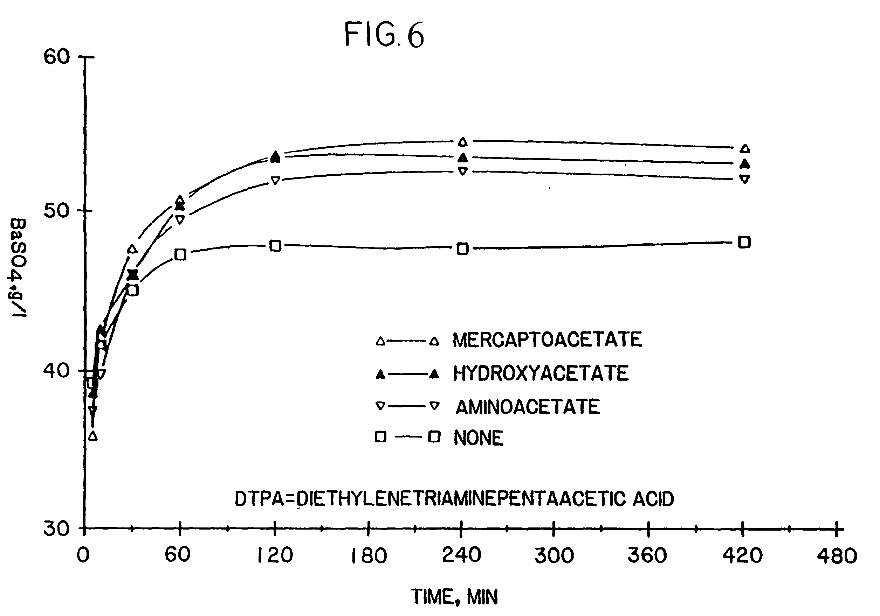

As shown in Figure 6, DTPA alone and DTPA with the substituted acetic acids were compared at 100°C. The results demonstrate that the DTPA/carboxylate combination complexes more barium sulphate than DTPA alone.

As noted above, the effect of cations is also very important to the success of the scale solvent, especially when added with the sizeable portion of caustic required to adjust the pH to 12. Dissolution is enhanced as the size of the cation is increased, i.e. lithium, sodium, potassium and cesium. Lithium and sodium hydroxides in the presence of EDTA, or DTPA, and catalysts are not soluble at a pH of 12, the optimum value. Cesium is too difficult to obtain, both in quantity and price. Therefore, potassium hydroxide, in the form of caustic potash, is the pH adjusting reagent of choice.

Another effective chelant is cyclohexanediaminetetraacetic acid (CDTA), which may be used with any of the synergists disclosed hereinabove.

## Claims

1. An aqueous composition for dissolving alkaline earth sulfate scale comprising an aqueous alkaline solution having a pH of from 11 to 13, from 0.3M to 0.6M of a chelating agent comprising a polyaminopolycarboxylic acid or a salt of such an acid, and from 0.3M to substantially 0.6M of a synergist comprising at least one anion selected from amino-, mercapto- and hydrogen-acetic acid to improve the scale removing characteristics of the composition.

2. A method for removing alkaline earth sulphate scale comprising:
(a) contacting said scale with an aqueous solution having a pH of 11 to 13 which solution contains 0.3-0.6 M polyaminopolycarboxylic acid chelant, and 0.3-0.6 M catalyst amino-, mercapto- or hydroxy-acetic acid thereby making a solution which can dissolve substantially more scale within a substantially reduced time period than is posible with said chelant alone; and
(b) allowing said solution to remain in contact with said scale for a time sufficient and at a temperature sufficient to dissolved said scale.

## Patentansprüche

1. Wässrige Zusammensetzung zum Auflösen einer Erdalkalisulfatablagerung, enthaltend eine wässrige alkalische Lösung mit einem pH-Wert von 11 bis 13, 0,3 bis 0,6 -mol eines Chelatbildners, der eine Polyaminopolycarbonsäure oder ein Salz einer solchen Säure enthält, und 0,3 bis im wesentlichen 0,6 mol eines Synergisten, der mindestens ein Anion aufweist, das aus Amino-, Mercapto- und Hydroxyessigsäure ausgewählt ist, um die Eigenschaften der Zusammensetzung bezüglich des Entfernens der Ablagerung zu verbessern.

2. Verfahren zum Entfernen einer Erdalkalisulfatablagerung mit folgenden Stufen:
(a) Behandeln der genannten Ablagerung mit einer wässrigen Lösung, die einen pH-Wert von 11 bis 13 aufweist und 0,3 bis 0,6 mol einer Polyaminopolycarbonsäure als Chelatbildner sowie 0,3 bis 0,6 mol einer Amino-, Mercapto- oder Hydroxyessigsäure als Katalysator enthält, und Ausbilden einer Lösung dadurch, die wesentlich mehr Ablagerung innerhalb einer wesentlich verkürzten Zeit auflösen kann als es mit dem genannten Chelatbildner allein möglich wäre, und
(b) Inkontakthalten der genannten Lösung mit der Ablagerung während einer Zeit und bei einer Temperatur, die ausreichen, um die Ablagerung aufzulösen.

## Revendications

1. Une composition aqueuse pour dissoudre des dépôts de sulfates alcalino-terreux, comprenant une solution aqueuse alcaline, ayant un pH compris entre 11 et 13, formée de 0,3 M à 0,6 M d'un agent chélatant, comprenant un acide polyaminopolycarboxylique ou un sel d'un tel acide, et de 0,3 M à substantiellement 0,6 M d'un agent à action synergique comprenant au moins un anion sélectionné parmi les acides amino-, mercapto- et hydroxy-acétiques, afin d'améliorer les caractéristiques de la composition à l'égard de l'élimination des dépôts.

2. Un procédé d'élimination des dépôts de sulfates alcalino-terreux comprenant :
(a) la mise en contact desdits dépôts avec une solution aqueuse ayant un pH de 11 à 13, laquelle solution contient de 0,3 M à 0,6 M d'un agent chélatant consistant en acide polyaminopolycarboxylique et de 0,3 à 0,6 M de catalyseur consistant en un acide amino-, mercapto- ou hydroxy-acétique, de façon à ainsi obtenir une solution qui peut dissoudre substantiellement davantage de dépôt en une durée de temps substantiellement réduite par rapport à celle qu'il est possible d'obtenir avec ledit agent chélateur seul ; et
(b) le maintien de ladite solution au contact avec lesdits dépôts pendant une durée et à une température suffisantes pour dissoudre ladite calamine.
